# EUROPÄISCHE PATENTANMELDUNG

(11) **EP 1 400 469 A1**
(43) Veröffentlichungstag der Anmeldung: **24.03.2004**
(21) Anmeldenummer: 03015943.8
(22) Anmeldetag: 12.07.2003
(51) Int. Cl.: B65G 37/02, B65G 15/42, B65G 17/00, B65G 35/06, B65G 21/10

(54) **Transfersystem für Montageanlagen**

(30) Priorität: 23.09.2002 DE 10244307
(71) Anmelder: AKB Automationskomponenten und Basismaschinen GmbH & Co.KG, 37308 Heiligenstadt (DE)
(72) Erfinder: Grün, Walter, 71522 Backnang-Maubach (DE); Seebon, Dennis, 37318 Uder (DE); Franke, Mario, 34359 Reinhardshagen (DE); Döring, Jörg, 37308 Heiligenstadt (DE)
(74) Vertreter: Albrecht, Rainer Harald, Dr.-Ing.

(57) **Zusammenfassung**

Die Erfindung betrifft ein Transfersystem für Montageanlagen aus modularen Baugruppen und Komponenten, die Werkstückträger, Längsförderstrecken für einen Längstransport der Werkstückträger, Querförderstrecken für einen Quertransport der Werkstückträger und Querverschiebeeinheiten umfassen. Die Förderstrecken sind als doppelspurige Band- oder Kettenförderer ausgebildet. Erfindungsgemäß sind eine oder mehrere der Längs- oder Querförderstrecken mit einer Einzugsvorrichtung (7) für einen Schnelleinzug der Werkstückträger (3) ausgerüstet, die eine Führungsbahn (12) aus randseitigen Führungsleisten und eine Gurtumlenkstation (13) mit verschwenkbaren Umlenkrädern (14) aufweist. Mittels einer Schwenkbewegung der Umlenkräder ist ein auf der Führungsbahn aufliegender Werkstückträger (3) von den über die Umlenkräder geführten Gurten (10) erfassbar. Die Gurte (10) weisen ein außenseitiges Zahnprofil auf, das in ein Kupplungsprofil an der Unterseite der Werkstückträger eingreift (3). Das Kupplungsprofil ist an einem unterseitig vorstehenden Rahmen der Werkstückträger angeordnet und besteht in den Rahmenecken aus Vorsprüngen, die in Form einer Matrix angeordnet sind und sowohl auf Längsförderstrecken als auch auf Querförderstrecken in das Zahnprofil der Gurte eingreifen.

## Beschreibung

Die Erfindung betrifft ein Transfersystem für Montageanlagen aus modularen Baugruppen und Komponenten, die Werkstückträger, Längsförderstrecken für einen Längstransport der Werkstückträger, Querförderstrecken für einen Quertransport der Werkstückträger und Querverschiebeeinheiten umfassen, wobei die Förderstrecken als doppelspurige Band- oder Kettenförderer ausgebildet sind, die jeweils parallele, auf Streckenprofilen geführte Gurte oder Ketten aufweisen. Die Werkstückträger sind mittels der Querverschiebeeinheiten rechtwinklig von einer Längsförderstrecke in eine Querförderstrecke ausschleusbar sowie von einer Querförderstrecke in eine Längsförderstrecke einschleusbar.

Ein Transfersystem des beschriebenen Aufbaues ist aus der Praxis bekannt und beispielsweise in der Firmendruckschrift Bosch Automation "Transfersystem TS*2plus*" (Robert Bosch GmbH, Automationstechnik) beschrieben. Werkstückträger mit darauf fixierten Werkstücken werden auf stetig umlaufenden Gurten bzw. Ketten Arbeitsstationen einer Montageanlage zugeführt, die entlang der Förderstrecken angeordnet sind. An den Stationen werden die Werkstückträger durch Vereinzeler angehalten, während die Gurte bzw. Ketten weiterlaufen. Nach beendetem Arbeitsvorgang an der jeweiligen Station wird der Werkzeugträger für den Transport zur nächsten Arbeitsstation freigegeben.

Bei Transfervorrichtungen, die aus den beschriebenen Baugruppen und Komponenten aufgebaut sind, ist die Zuführgeschwindigkeit der Werkstückträger zu den Arbeitsstationen nicht oder nur wenig variabel. Die Fertigungsgeschwindigkeit in einer komplexen Montageanlage ließe sich verbessern, wenn an Stationen, die lange Bearbeitungszeiten erfordern, eine schnellere Werkstückzuführung realisiert werden könnte. Vor diesem Hintergrund liegt der Erfindung die Aufgabe zugrunde, das beschriebene Transfersystem durch Baugruppen und Komponenten so zu ergänzen, dass ein Schnelleinzug von Werkstückträgern an Längs- und Querförderstrecken möglich ist. Insbesondere soll auch ein Nachrüsten bestehender Anlagen, die aus dem beschriebenen Transfersystem aufgebaut sind, möglich sein.

Ausgehend von einem Transfersystem des eingangs beschriebenen Aufbaues wird die Aufgabe erfindungsgemäß dadurch gelöst,
dass eine oder mehrere der Längs- oder Querförderstrecken mit einer Einzugsvorrichtung für einen Schnelleinzug der Werkstückträger ausgerüstet sind, die eine Führungsbahn aus randseitigen Führungsleisten und eine Gurtumlenkstation mit verschwenkbaren Umlenkrädern aufweist, wobei mit einer Schwenkbewegung der Umlenkräder ein auf der Führungsbahn aufliegender Werkstückträger von den über die Umlenkräder geführten Gurten erfassbar ist, und
dass die Gurte der mit einem Schnelleinzug ausgerüsteten Förderstrecken ein außenseitiges Zahnprofil ausweisen, das in ein Kupplungsprofil an der Unterseite der Werkstückträger eingreift, wobei das Kupplungsprofil an einem unterseitig vorstehenden Rahmen der Werkstückträger angeordnet ist und an den Rahmenecken aus Vorsprüngen besteht, die in Form einer Matrix angeordnet sind und sowohl auf Längsförderstrecken als auch auf Querförderstrecken in das Zahnprofil der Gurte eingreifen.

Zweckmäßig sind die Gurte als Zahnriemen mit beidseitigem Zahnprofil ausgebildet. Ferner weisen die mit einem Schnelleinzug ausgerüsteten Förderstrecken ein Gestell mit Streckenprofilen für die Führung der beiden parallelen Gurte und eine Antriebsstation für eine taktweise Gurtbewegung auf. Gemäß einer bevorzugten Ausführungsform der Erfindung sind die Umlenkräder an einem Schwenkarm angeordnet, der um eine horizontale Achse schwenkbar gelagert ist, wobei auf der Achse Stützräder angeordnet sind, über die die Gurte im Obertrum geführt sind. Als Antrieb für die vertikalen Schwenkbewegungen eignen sich insbesondere pneumatische Zylinder/Kolbenanordnungen.

Die Werkstückträger sind als Systemkomponenten so ausgebildet, dass sie an der beschriebenen Einzugsvorrichtung erfassbar sind, und zwar unabhängig davon, ob die Werkstückträger auf Längs- oder Querförderstrecken transportiert werden. Dazu ist lediglich eine rahmenförmige Bodenfläche mit dem Kupplungsprofil versehen, welche auf den Gurten der Förderstrecken aufliegt. In den Rahmenecken, die sowohl bei dem Transport auf Längsförderstrecken als auch auf Querförderstrecken auf den Gurten aufliegen, besteht das Kupplungsprofil aus einer Mehrzahl von Vorsprüngen, die in Quer- und Längsrichtung voneinander beabstandet sind und in Form einer Matrix so angeordnet sind, dass sie stets in das Zahnprofil der Gurte eingreifen. An Rahmenabschnitten zwischen den Rahmenecken besteht das Kupplungsprofil vorzugsweise aus einem zum Zahnprofil der Gurte komplementären Verzahnungsprofil. Ferner kann der Rahmen der Werkstückträger unterseitige Ausschnitte zum Überfahren von Anschlägen aufweisen, wobei im Bereich dieser Ausschnitte in weiterer Ausgestaltung Positionierhülsen für Aushebeeinrichtungen und/oder Führungsnuten für innenliegende Führungsleisten der Förderstrecken angeordnet sind. Die Rahmen der Werkstückträger bestehen vorzugsweise aus Kunststoff oder Leichtmetall. In weiterer Ausgestaltung lehrt die Erfindung, dass in das Kupplungsprofil Stahlelemente zur Abfrage mit induktiven Näherungsschaltern eingelassen sind, deren Außenseite an das Kupplungsprofil angepasst ist und mit diesem bündig abschließt. Der Rahmen der Werkstückträger kann aus Rahmenleisten aufgebaut sein, die durch Steckverbindungen rahmenförmig zusammengesetzt sind und identische Funktionselemente aufweisen.

Im Folgenden wird die Erfindung anhand einer lediglich ein Ausführungsbeispiel darstellenden Zeichnung erläutert. Es zeigen schematisch
- Fig. 1: eine Transfervorrichtung nach dem Stand der Technik in einer Montageanlage,
- Fig. 2: die Seitenansicht einer Förderstrecke mit einer Einzugsvorrichtung für einen Schnelleinzug von Werkstückträgern,
- Fig. 3: eine Draufsicht auf die in Fig. 2 dargestellte Vorrichtung,
- Fig. 4: den Schnitt A-A aus Fig. 2 mit aufliegendem Werkstückträger in einer gegenüber Fig. 2 vergrößerten Darstellung,
- Fig. 5: die Unteransicht des in Fig. 4 dargestellten Werkstückträgers.

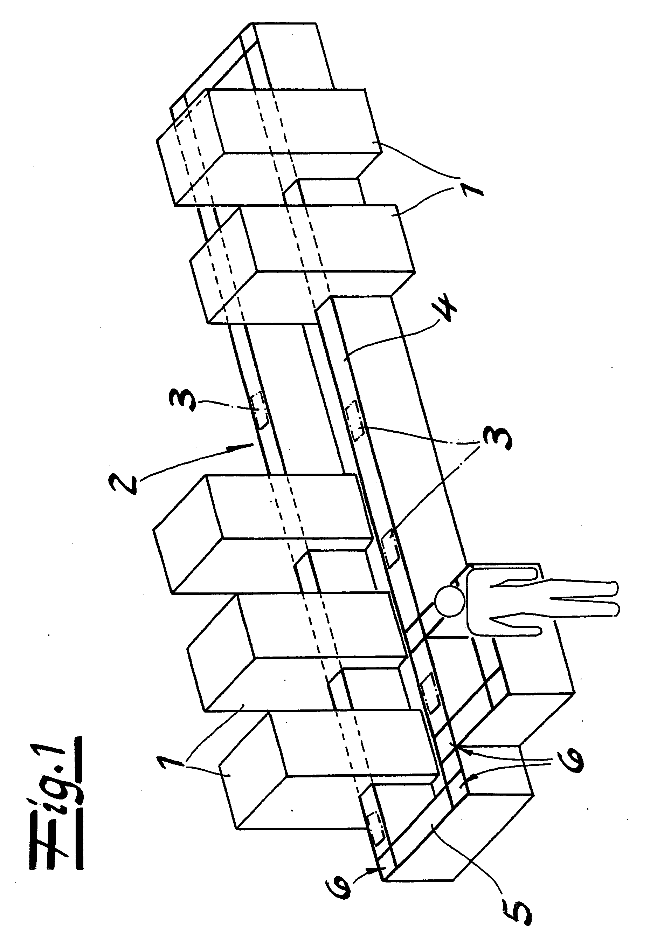

Die Fig. 1 zeigt schematisch eine Montageanlage mit mehreren Arbeitsstationen 1 und einer nach dem Stand der Technik ausgebildeten Transfervorrichtung 2, mit der Werkstücke auf Werkstückträgern 3 von Arbeitsstation zu Arbeitsstation bewegt werden. Die Transfervorrichtung 2 ist aus modularen Baugruppen und Komponenten nach dem Stand der Technik aufgebaut. Sie umfasst Längsförderstrecken 4 für einen Längstransport der Werkstückträger, Querförderstrecken 5 für einen Quertransport der Werkstückträger und Querverschiebeeinheiten 6, mittels der die Werkstückträger rechtwinklig von einer Längsförderstrecke 4 in eine Querförderstrecke 5 ausschleusbar sowie von einer Querförderstrecke in eine Längsförderstrecke einschleusbar sind. Die Förderstrecken 4, 5 sind als doppelspurige Bandfördererstrecken ausgebildet und weisen jeweils parallele auf Streckenprofilen geführte Gurte auf.

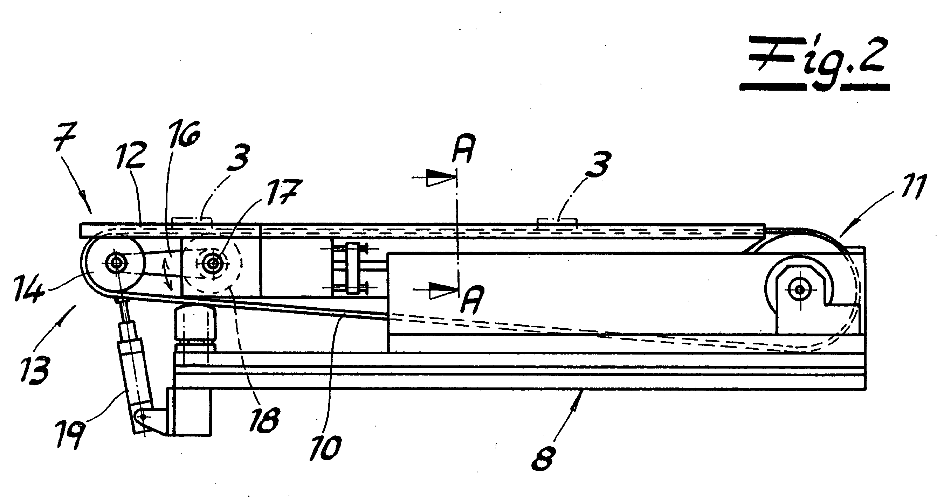

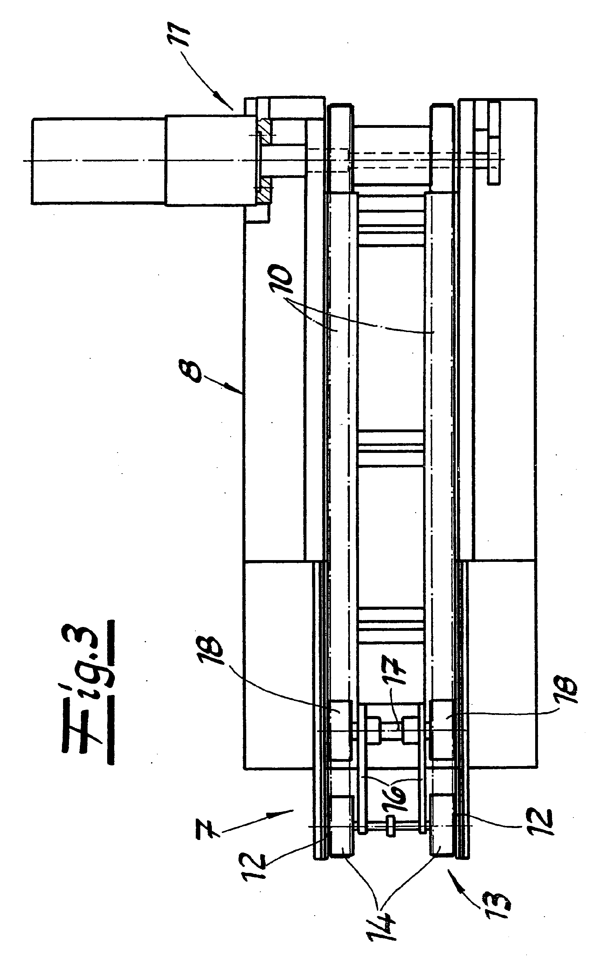

Die in den Fig. 2 und 3 dargestellte Förderstrecke ist erfindungsgemäß mit einer Einzugsvorrichtung 7 für einen Schnelleinzug der Werkstückträger 3 ausgerüstet und für den Einbau in eine Transferanlage bestimmt, die aus den in Fig. 1 dargestellten modularen Baugruppen und Komponenten aufgebaut ist. Die in den Fig. 2 und 3 dargestellte Förderstrecke ist gleichermaßen zur Verwendung als Längs- und/oder Querförderstrecke geeignet und kann in bestehende Anlagen integriert werden. Sie ist als doppelspuriger Bandförderer ausgebildet und weist ein Gestell 8 mit Streckenprofilen 9 für die Führung der parallelen Gurte 10 und eine Antriebsstation 11 für eine taktweise Gurtbewegung auf. Die Einzugsvorrichtung 7 besteht in ihrem grundsätzlichen Aufbau aus einer Führungsbahn 12 aus randseitigen Führungsleisten und einer Gurtumlenkstation 13 mit vertikal verschwenkbaren Umlenkrädern 14. Mit einer Schwenkbewegung der Umlenkräder 14 ist ein auf der Führungsbahn 12 aufliegender Werkstückträger 3 von den über die Umlenkräder 14 geführten Gurten 10 erfassbar. Die Gurte 10 bestehen aus Zahnriemen mit beidseitigem Zahnprofil. Das außenseitige Zahnprofil greift in ein Kupplungsprofil 15 an der Unterseite der Werkstückträger 3 ein.

Den Fig. 2 und 3 entnimmt man, dass die Umlenkräder 14 an einem Schwenkarm 16 angeordnet sind, der um eine horizontale Achse 17 schwenkbar gelagert ist. Auf der Achse 17 sind Stützräder 18 angeordnet, über die die Gurte 10 im Obertrum geführt sind. Als Antrieb für die vertikalen Schwenkbewegungen der Umlenkräder 14 ist eine pneumatische Zylinder/Kolbenanordnung 19 vorgesehen.

Das Kupplungsprofil 15 der Werkstückträger 3 ist so ausgebildet, dass die Werkstückträger 3 sowohl von Einzugsvorrichtungen in Längsförderstrecken 4 als auch von Einzugsvorrichtungen in Querförderstrecken 5 erfassbar sind.

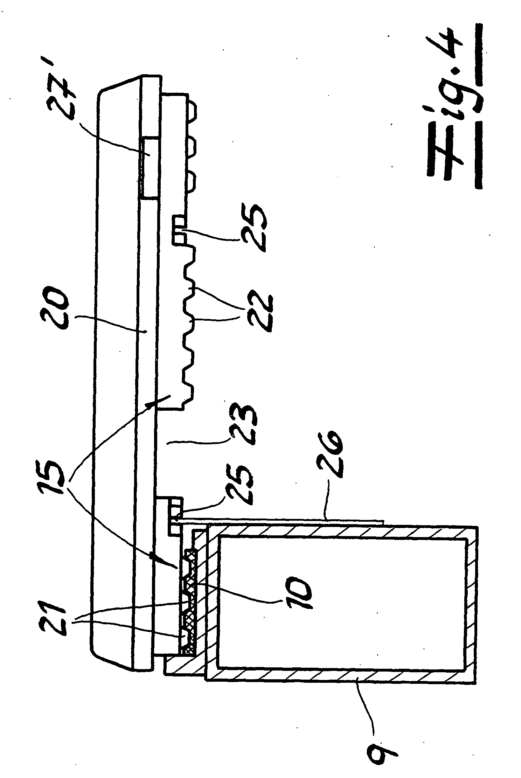

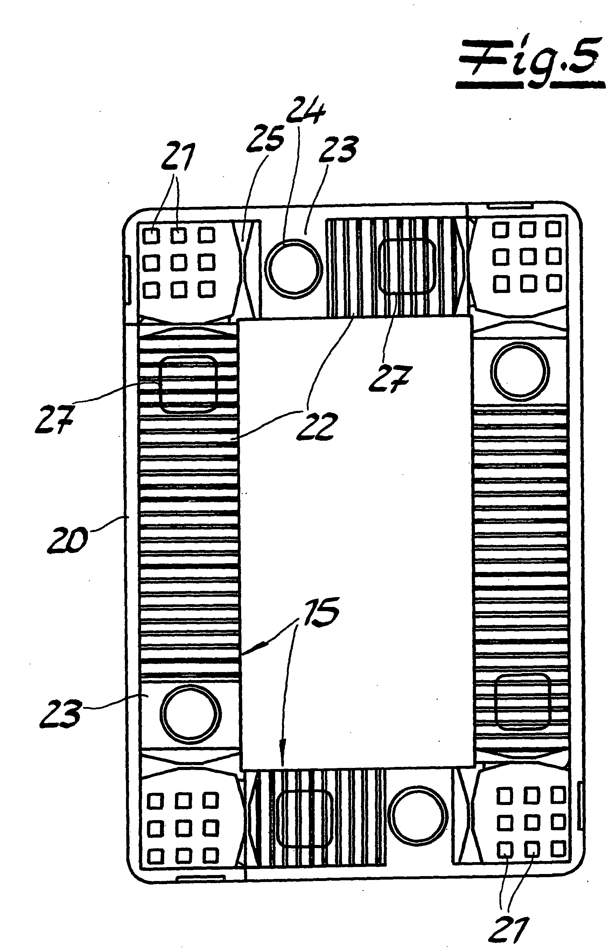

Den Fig. 4 und 5 entnimmt man, dass das Kupplungsprofil 15 zu diesem Zweck lediglich an einem unterseitig vorstehenden Rahmen 20 der Werkstückträger angeordnet ist und in den Rahmenecken aus Vorsprüngen 21 besteht, die in Form einer Matrix angeordnet sind und sowohl auf Längsförderstrecken 4 als auch auf Querförderstrecken 5 in das Zahnprofil der Gurte 10 eingreifen. An Rahmenabschnitten zwischen den Rahmenecken besteht das Kupplungsprofil 15 aus einem zum Zahnprofil der Gurte komplementären Verzahnungsprofil 22. Die Werkstückträger 3 einschließlich ihres Rahmens können als einteilige Spritzgussteile, z. B. aus Kunststoff, gefertigt sein. Vorzugsweise ist der Rahmen 20 der Werkstückträger jedoch aus Rahmenleisten aufgebaut, die durch Steckverbindungen rahmenförmig zusammengesetzt sind und identische Funktionselemente aufweisen. Die Rahmenleisten weisen im Ausführungsbeispiel unterseitige Ausschnitte 23 zum Überfahren von Anschlägen auf, wobei im Bereich dieser Ausschnitte 23 Positionierhülsen 24 für Aushebeeinrichtungen sowie Führungsnuten 25 für innenliegende Führungsleisten 26 der Förderstrecken angeordnet sein können. Ferner sind in Ausnehmungen des Kupplungsprofils 15 Stahleelemente 27 zur Abfrage von induktiven Näherungsschaltern eingelassen, deren Außenseite an das Kupplungsprofil 15 angepasst ist und mit diesem bündig abschließt. Weitere sogenannte Bedämpfungselemente 27', die mit Näherungsschaltern zusammenwirken, können an den Rändern der Werkstückträger 3 angeordnet sein.

## Patentansprüche

1. Transfersystem für Montageanlagen aus modularen Baugruppen und Komponenten, die Werkstückträger (3), Längsförderstrecken (4) für einen Längstransport der Werkstückträger, Querförderstrecken (5) für einen Quertransport der Werkstückträger und Querverschiebeeinheiten (6) umfassen, wobei die Förderstrecken (4, 5) als doppelspurige Band- oder Kettenförderer ausgebildet sind, die jeweils parallele, auf Streckenprofilen geführte Gurte oder Ketten aufweisen, und wobei die Werkstückträger (3) mittels der Querverschiebeeinheiten (6) rechtwinklig von einer Längsförderstrecke (4) in eine Querförderstrecke (5) ausschleusbar sowie von einer Querförderstrecke in eine Längsförderstrecke einschleusbar sind, **dadurch gekennzeichnet,**
**dass** eine oder mehrere der Längs- oder Querförderstrecken (4, 5) mit einer Einzugsvorrichtung (7) für einen Schnelleinzug der Werkstückträger (3) ausgerüstet sind, die eine Führungsbahn (12) aus randseitigen Führungsleisten und eine Gurtumlenkstation (13) mit verschwenkbaren Umlenkrädern (14) aufweist, wobei mit einer Schwenkbewegung der Umlenkräder (14) ein auf der Führungsbahn (12) aufliegender Werkstückträger (3) von den über die Umlenkräder (14) geführten Gurten (10) erfassbar ist, und
**dass** die Gurte (10) der mit einem Schnelleinzug ausgerüsteten Förderstrecken ein außenseitiges Zahnprofil ausweisen, das in ein Kupplungsprofil (15) an der Unterseite der Werkstückträger (3) eingreift, wobei das Kupplungsprofil (15) an einem unterseitig vorstehenden Rahmen (20) der Werkstückträger angeordnet ist und an den Rahmenecken aus Vorsprüngen (21) besteht, die in Form einer Matrix angeordnet sind und sowohl auf Längsförderstrecken (4) als auch auf Querförderstrecken (5) in das Zahnprofil der Gurte (10) eingreifen.

2. Transfersystem nach Anspruch 1, **dadurch gekennzeichnet, dass** die mit einem Schnelleinzug ausgerüsteten Förderstrecken ein Gestell (8) mit Streckenprofilen (9) für die Führung der beiden parallelen Gurte (10) und eine Antriebsstation (11) für eine taktweise Gurtbewegung aufweisen.

3. Transfersystem nach Anspruch 1 oder 2, **dadurch gekennzeichnet, dass** die Umlenkräder (14) an einem Schwenkarm (16) angeordnet sind, der um eine horizontale Achse (17) schwenkbar gelagert ist, und dass auf der Achse (16) Stützräder (18) angeordnet sind, über die die Gurte (10) im Obertrum geführt sind.

4. Transfersystem nach einem der Ansprüche 1 bis 3, **dadurch gekennzeichnet, dass** die Gurtumlenkstation (13) eine pneumatische Zylinder/Kolbenanordnung (19) für die Stellbewegung der Umlenkräder (14) aufweist.

5. Transfersystem nach einem der Ansprüche 1 bis 4, **dadurch gekennzeichnet, dass** das Kupplungsprofil (15) der Werkstückträger (3) an Rahmenabschnitten zwischen den Rahmenecken aus einem zum Zahnprofil der Gurte (19) komplementären Verzahnungsprofil (22) besteht.

6. Transfersystem nach einem der Ansprüche 1 bis 5, **dadurch gekennzeichnet, dass** der Rahmen (20) der Werkstückträger (3) unterseitige Ausschnitte (23) zum Überfahren von Anschlägen aufweist, wobei im Bereich dieser Ausschnitte (23) Positionierhülsen (24) für Aushebeeinrichtungen und/oder Führungsnuten (25) für innenliegende Führungsleisten (26) der Förderstrecke angeordnet sind.

7. Transfersystem nach einem der Ansprüche 1 bis 6, **dadurch gekennzeichnet, dass** der Rahmen (20) der Werkstückträger aus Kunststoff oder Leichtmetall besteht und dass in das Kupplungsprofil (15) Stahlelemente (27) zur Abfrage mit induktiven Näherungsschaltern eingelassen sind, deren Außenseite an das Kupplungsprofil (15) angepasst ist und mit diesem bündig abschließt.
